# EUROPÄISCHE PATENTSCHRIFT

(11) **EP 3 571 037 B1**
(45) Veröffentlichungstag und Bekanntmachung des Hinweises auf die Patenterteilung: **11.05.2022**
(21) Anmeldenummer: 18703214.9
(22) Anmeldetag: 17.01.2018
(51) Int. Cl.: B29C 51/42, B29C 51/46, B29B 13/02, B29B 13/08

(54) **THERMOFORMVORRICHTUNG SOWIE VERFAHREN**
THERMOFORMING APPARATUS AND METHOD
DISPOSITIF DE THERMOFORMAGE ET PROCÉDÉ ASSOCIÉ

(30) Priorität: 17.01.2017 DE 102017200632
(43) Veröffentlichungstag der Anmeldung: 27.11.2019
(73) Patentinhaber: FRIMO Group GmbH, 49504 Lotte (DE)
(72) Erfinder: FRAUENSCHUH, Christian, 5112 Lamprechtshausen (AT)
(74) Vertreter: Hoffmann Eitle
(86) Internationale Anmeldenummer: PCT/EP2018/051096
(87) Internationale Veröffentlichungsnummer: WO 2018/134242

(56) Entgegenhaltungen:
- US-A- 4 462 786
- US-A- 4 933 126
- US-A1- 2004 265 409
- US-A1- 2012 117 922

## Beschreibung

### Technisches Gebiet

Die vorliegende Erfindung betrifft eine Thermoformvorrichtung sowie ein Verfahren zum Thermoformen. Die Thermoformvorrichtung und das Verfahren können beispielsweise im Bereich der Automobilindustrie zum Einsatz kommen.

Eine derartige Vorrichtung sowie ein derartiges Verfahren können beispielsweise bei Inline-Thermoformanlagen, Einplatzthermoformanlagen sowie im Rahmen von Presskaschierprozessen oder Nutkaschierprozessen zum Einsatz kommen.

### Stand der Technik

Thermoformen ist ein zur Herstellung von dünnwandigen Bauteilen aus thermoplastischen Kunststoffen gängiges Verfahren. Das Erwärmen einer bei diesem Verfahren zur Anwendung kommenden Folie (Halbzeug) stellt einen Kernbereich des Thermoformens dar. Neben einer qualitativ hochwertigen Verarbeitung steht in diesem Zusammenhang unter anderem auch die Thematik der Energieeffizienz und Aufheizeit im Fokus. Nachdem bereits der Aufheizvorgang einen hohen Anteil der erforderlichen Gesamtenergie beansprucht, liegt in diesem Bereich ein hohes Potential zur Reduzierung der Energiekosten, und somit auch der Herstellungskosten.

Eine Thermoformanlage umfasst üblicherweise mehrere Infrarotheizfelder mit einer Vielzahl von IR-Heizstrahlern (bspw. Halogenstrahlern). Die Heizfelder werden eingesetzt, um die Folien auf eine Verarbeitungstemperatur zu erwärmen, so dass die Folien nachfolgend weiterverarbeitet werden können.

Dabei werden die IR-Heizstrahler zu deren Steuerung beispielsweise mit einer reduzierten Spannung betrieben, oder es wird ein schnell getaktetes Ein-/Ausschalten der IR-Heizstrahler (Pulspausenmodulation) durchgeführt. Der Betrieb mit reduzierter Spannung ergibt eine nicht-lineare Strahlungsabgabe (Strahlungsenergie) der einzelnen Heizstrahler. Die im Stand der Technik weitgehend undefinierten Betriebszustände überlagern sich im Gesamtheizfeld und waren nicht berechenbar.

Der Bediener hat beim Betrieb des Heizfeldes die Möglichkeit, nach den gegebenen Randbedingungen einen prozentualen Betriebspunkt zu wählen. Die prozentuale Stellung am Heizungsdisplay hat dabei jedoch keinen direkten Bezug zur Oberflächentemperatur der zu erwärmenden Folie. Somit sind Erfahrungswerte des Bedieners erforderlich, um eine qualitativ hochwertige Verarbeitung der Folien zu gewährleisten. Ferner ist die Energieeffizienz des Heizfeldes im Betrieb eher gering, da die IR-Heizstrahler nicht im Nennlastbereich betrieben werden.

Die US 2004/0265409 A1 betrifft ein Steuersystem für einen Thermoformofen, mit dem ein Kunststoffelement in Vorbereitung auf ein Thermoformen vorgewärmt wird.

Ferner ist die US 4,462,786 A1 bekannt, die eine Thermoformformvorrichtung und ein Verfahren nach den Oberbegriffen der unabhängigen Ansprüchen beschreibt. In der US 4,933,126 A1 wird ein Verfahren für Temperatursteuerung beschrieben. Dabei wird ein Erwärmen wieder begonnen, wenn eine Temperatur unter einer bestimmten Temperatur erfasst und, und zwar in einer relativ schnellen, zyklischen Wiederholung, um das Material auf einer relativ konstanten Temperatur zu halten.

Die US 2012/0117922 A1 beschreibt eine Heizplatte mit einer Vielzahl von Heizpatronen und ein entsprechendes Verfahren.

### Gegenstand der Erfindung

Ausgehend vom Stand der Technik ist es eine Aufgabe der vorliegenden Erfindung, die im Stand der Technik bekannten Probleme zu verringern oder vollständig zu beheben, und eine Vorrichtung mit gesteigerter Energieeffizienz und einfacher Bedienbarkeit bereitzustellen. Entsprechendes gilt für ein Verfahren.

Der Gegenstand des Anspruchs 1 stellt eine Vorrichtung bereit, mit der die zuvor genannten Ziele erreicht werden. Weitere bevorzugte Ausführungsformen sind in den abhängigen Ansprüchen aufgeführt. Ferner betrifft die vorliegende Erfindung ein Verfahren gemäß Anspruch 8.

Bestimmte Einzelmerkmale der Unteransprüche zur Vorrichtung können auch für das Verfahren zum Einsatz kommen.

Um unterschiedliche gewünschte Temperaturgradienten und systembedingte energetische Faktoren zu berücksichtigen (beispielsweise sind die Randbereiche auf Grund des kalten Spannrahmens/Klemmvorrichtung anderen Bedingungen ausgesetzt als der Mittenbereich der Folie), wird eine Einschaltdauer für jeden einzelnen Heizstrahler vorab festgelegt und zeitversetzt im Verfahrensablauf geschaltet. Am Ende des Heizprozesses können alle Strahler zeitgleich abgeschaltet werden.

Auf diese Weise ist es möglich, das eine Vielzahl von Heizstrahlern aufweisende Heizfeld mit hoher Energieeffizienz zu betreiben, wobei ferner vergleichsweise kurze Taktzeiten erreichbar sind. Ferner können dem Bediener Wahlmöglichkeiten entsprechend der konkret zu verarbeitenden Folie und entsprechende Temperaturprofile an die Hand gegeben werden, um die Thermoformanlage optimal betreiben zu können. Erfindungsgemäß ist ferner in der Steuereinrichtung eine vorab für den Betrieb eines Heizstrahlers ermittelte Referenzkurve für die Erwärmung einer bestimmten Folienart hinterlegt, welche Referenzkurve für eine Überlagerungsberechnung aus der Vielzahl der Heizstrahler für Einschaltzeitpunkte der Heizstrahler eingesetzt/ verwendet wird.

Der vorliegenden Erfindung liegt u.a. die Erkenntnis zu Grunde, dass der Wirkungsgrad der Heizstrahler bei 100% Leistung maximal ist. Somit wird ein zeitgesteuerter Betrieb der einzelnen Heizstrahler bevorzugt.

Durch die Festlegung auf einen einzigen Betriebspunkt jedes Heizstrahlers kann eine Referenzkurve des Aufheizverhaltens (Folientemperatur über die Zeit) ermittelt werden. Aus dieser Referenz können folienspezifische Parameter abgeleitet werden, die in einer Überlagerungsberechnung die gegenseitige Beeinflussung aller Heizstrahler und durch parametrische Korrektur den Einfluss des Spannrahmens/Klemmvorrichtung berücksichtigt. Die Referenzkurve kann durch einen Referenzkurvenversuch ermittelt worden sein.

Gemäß einer bevorzugten Ausführungsform sind die Heizstrahler Infrarot-Heizstrahler sind. Gemäß einer Variante können die Heizstrahler Infrarot-Halogen-Heizstrahler sein. Auch können mittelwellige IR-Strahler zum Einsatz kommen. Die Infrarot-Heizstrahler weisen eine hohe Leistungsabgabe auf und sind deshalb für das Thermoformen geeignet.

Bevorzugt ist die Steuereinrichtung der Thermoformeinrichtung eingerichtet, den Ausschaltzeitpunkt der Heizstrahler festzulegen. Somit können die Heizstrahler mit einem einzigen Betriebspunkt, jedoch zeitlich versetzt, betrieben werden, bis der Gesamtprozess zu einem Zeitpunkt beendet wird.

Ferner kann eine Heizfeldeinstelleinrichtung vorgesehen sein, um die Temperaturverteilung des zumindest einen Heizfeldes einzustellen. Diese ist bedienerfreundlich ausgelegt und weist entsprechende Eingabemöglichkeiten auf.

Dabei ist es bevorzugt, dass die Heizfeldeinstelleinrichtung eine Anzeige aufweist, um berechnete Temperaturfelder und/oder das Gesamttemperaturfeld des zumindest einen Heizfeldes anzuzeigen. Der Bediener erhält somit eine Rückmeldung bzgl. der gewählten Einstellungen und kann basierend hierauf weitere Maßnahmen ergreifen, um den Betrieb des zumindest einen Heizfeldes zu beeinflussen.

Im Rahmen der vorliegenden Erfindung ist es besonders bevorzugt, dass die Heizstrahler mit voller Leistung betrieben werden. Auf diese Weise werden die Heizstrahler lediglich in einem Betriebspunkt betrieben, und der Wirkungsgrad ist maximal.

Es ist bevorzugt, dass die Thermoformvorrichtung ein oberes Heizfeld und ein unteres Heizfeld aufweisen, zwischen denen die Einrichtung, insbesondere der Spannrahmen oder die Klemmeinrichtung, angeordnet werden kann. Dabei kann das obere Heizfeld eine abweichende Anzahl an Heizstrahlern aufweisen, als das untere Heizfeld.

Ferner betrifft die vorliegende Erfindung ein Verfahren, welches gemäß einer Ausführungsform die Vorrichtung gemäß einer der oben genannten Varianten einsetzten kann.

Wie bereits im Rahmen der Thermoformvorrichtung erwähnt, ist es bevorzugt, dass die Heizstrahler mit voller Leistung betrieben werden, so dass ein maximaler Wirkungsgrad erreicht wird.

Bevorzugt werden die Heizstrahler zum Abschluss der Erwärmung der Folie zeitgleich ausgeschaltet. Zu diesem Zeitpunkt ist die Folie für die Weiterverarbeitung vorbereitet. Um prozessbedingte Verzögerungen nach dem Erreichen der Verarbeitungstemperatur abzudecken kann auch ein zyklisches Takten der Heizstrahler für einen festzulegenden Zeitraum angewandt werden, der die Folie auf dem gewünschten Temperaturniveau hält.

Eine weitere Möglichkeit, prozessbedingte Verzögerungen nach dem Erreichen der Verarbeitungstemperatur abzudecken ist ein zeitlich begrenztes Abschalten der Heizstrahler, die Bestimmung der Folientemperatur im Messbereich und/oder die Neuberechnung der Heizparameter auf Basis der bekannten Temperaturkennlinie.

Im Rahmen des erfindungsgemäßen Verfahrens ist es insbesondere vorgesehen, dass vorab für den Betrieb eines Heizstrahlers eine Referenzkurve für die Erwärmung einer Folie ermittelt wird, welche Referenzkurve für eine Überlagerungsberechnung aus der Vielzahl der Heizstrahler für Einschaltzeitpunkte der Heizstrahler verwendet wird. Dieses Vorgehen ist insbesondere vorteilhaft, wenn unterschiedliche Folientypen zum Einsatz kommen, beispielsweise Folien mit und ohne zusätzlicher Schaumschicht.

Die Referenzkurve kann durch einen Referenzkurvenversuch ermittelt worden sein.

### Kurze Beschreibung der Zeichnungen

- Fig. 1: ist eine schematische Seitenansicht einer Thermoformvorrichtung gemäß der vorliegenden Ausführungsform;
- Fig. 2: ist eine schematische Detailansicht einer anderen mit der Thermoformvorrichtung verarbeiteten Folie;
- Fig. 3: ist eine schematische Seitenansicht, die den Einfluss des Spannrahmens illustriert;
- Fig. 4: zeigt die Überlagerung der Temperaturfelder verschiedener Heizstrahler.

### Detaillierte Beschreibung bevorzugter Ausführungsformen

Nachfolgend wird anhand der beigefügten Figuren eine bevorzugte Ausführungsform der vorliegenden Erfindung beschrieben. Weitere in diesem Zusammenhang genannte Modifikationen bestimmter Einzelmerkmale können jeweils einzeln miteinander kombiniert werden, um weitere Ausführungsformen auszubilden.

Die vorliegende Ausführungsform betrifft eine Thermoformvorrichtung. Eine solche Thermoformvorrichtung umfasst einen Spannrahmen 30 (als einem Beispiel einer Einrichtung zum Aufnehmen und Halten einer Folie F) , mit dem eine Folie F in einem geklemmten Zustand gehalten werden kann, sowie ein oberes und ein unteres Heizfeld 10, 20. Jedes der Heizfelder 10, 20 umfasst eine Vielzahl von Heizstrahlern 15, 25, die jeweils einzeln von einer Steuervorrichtung der Thermoformvorrichtung angesteuert werden können.

Beim Thermoformen wird im Rahmen der vorliegenden Ausführungsform eine thermoplastische Folie als ein Halbzeug verwendet. Charakteristisch für eine solche Folie ist unter anderem ein breites Verarbeitungstemperaturfenster, beispielsweise im Bereich von 140°C-210°C. Die Wärmeentwicklung der Folie hängt direkt von der Intensität der IR-Strahlung ab. Die Temperaturverteilung der Folie ist direkt proportional zur Strahlungsintensitätsverteilung.

Im Rahmen der hier beschriebenen Ausführungsform kommen beim IR-Heizfeld Halogenstrahler zum Einsatz. Allerdings können auch andere Infrarotheizstrahler zum Einsatz kommen, wie beispielsweise schnelle mittelwellige IR-Strahler.

Die genannten Heizstrahler umfassen einen gewendelten Wolframdraht, der in einer mit Argon befüllten Quarzglasröhre aufgenommen ist. Halogenstrahler haben aufgrund ihrer hohen Wendeltemperatur eine hohe Leistungsabgabe und sind deshalb für das Thermoformen geeignet.

Jeder Heizstrahler 15, 25 bildet ein glockenförmiges Temperaturfeld in längs und quer - Richtung aus. Die Strahlungen der einzelnen Heizstrahler 15, 25 überlagern sich. Die Erfinder haben erkannt, dass sich die Glockenkurven der Temperaturverteilungen der einzelnen Heizstrahler 15, 25 gemäß des Superpositionsprinzips verhält. Damit ist ein Gesamttemperaturfeld einstellbar.

Die Heizfelder unterliegen verschiedenen Störfaktoren, welche die Homogenität des jeweiligen Heizfeldes beeinflussen können. In diesem Zusammenhang ist insbesondere der Spannrahmen 30 zu nennen, der zum Halten der Folie F verwendet wird.

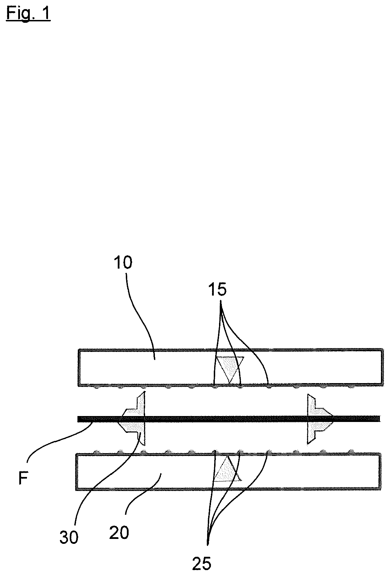

Fig. 1 zeigt eine schematische Seitenansicht einer Thermoformvorrichtung mit der vorliegenden Ausführungsform. Diese umfasst ein oberes Heizfeld 10, welches eine Vielzahl von Heizstrahlern 15 aufweist. Ferner ist ein unteres Heizfeld 20 vorgesehen, welches ebenfalls eine Vielzahl von Heizstrahlern 25 umfasst. Das obere Heizfeld 10 und das untere Heizfeld 20 sind gegenüberliegend angeordnet. Zwischen die Heizfelder 10, 20 wird ein Spannrahmen 30 eingebracht, der eine Folie F klemmt.

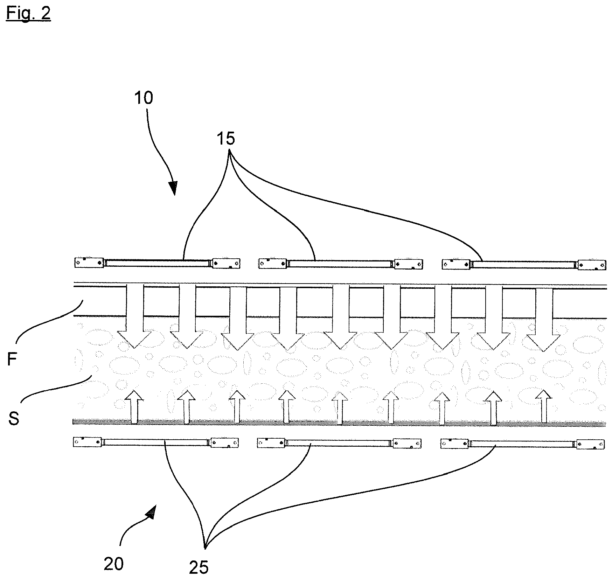

Fig. 2 zeigt eine Detailansicht, in der die Heizstrahler 15 des oberen Heizfelds 10 sowie die Heizstrahler 25 des unteren Heizfelds 20 im Detail dargestellt sind. Ferner ist ein Abschnitt der Folie F sowie ein Schaumabschnitt S (Schaumschicht) dargestellt, der gemäß des hier verarbeiteten Halbzeugs mit der Folie F verbunden ist. Da der Schaumabschnitt S auch als Isolator wirkt, ist bei der Bearbeitung der in Fig. 2 dargestellten Schaumfolie der Wärmeübergang in der Mitte der Folie vergleichsweise gering. Die Deckschicht F hingegen weist einen relativ hohen Wärmeleitkoeffizienten auf.

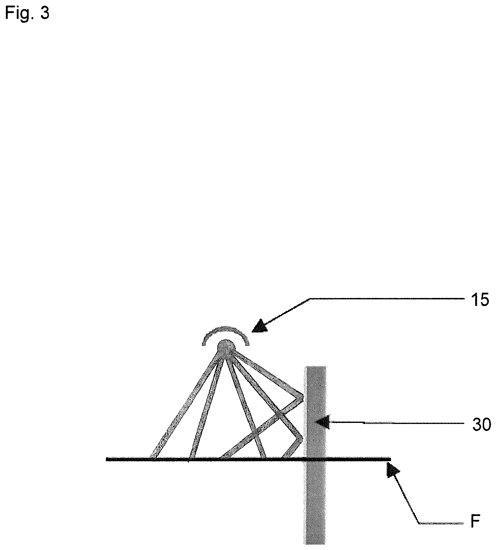

In Fig. 3 wird in schematischer Weise der Einfluss des Spannrahmens 30 auf die Strahlwirkung eines Heizstrahlers 15 (oder 25) dargestellt. Zum einen werden Wärmestrahlen am Spannrahmen 30 reflektiert und in den Randbereich der Folie F umgelenkt. Auf der anderen Seite hat der Spannrahmen 30 einen hohen Wärmeleitkoeffizienten, so dass dem Randbereich der Folie F gewissermaßen Wärme entzogen wird.

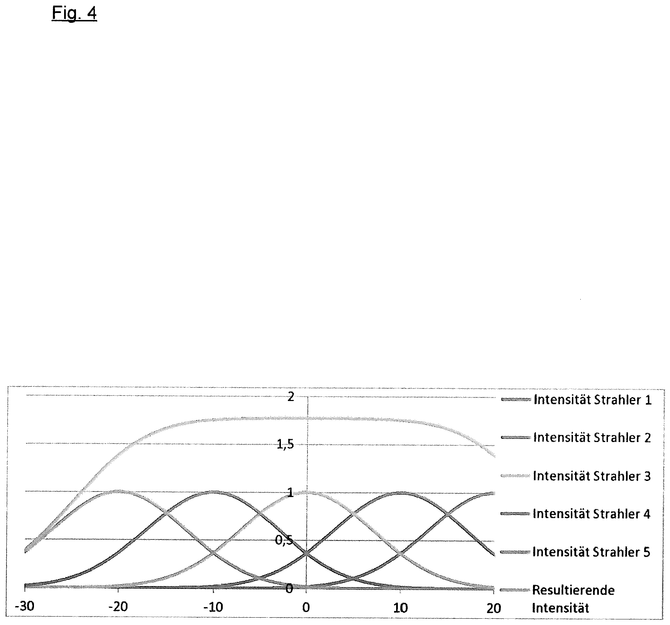

Beim Betrieb der Thermoformvorrichtung wird zunächst auf Grund der unterschiedlichen Temperaturverlaufskurven eines Folientyps oder Charge ein Referenzzyklus unter Verwendung einer definierten Anzahl von Heizstrahlern ermittelt. Hierfür wird das Heizfeld 10, 20 eingeschaltet und die Daten werden mit einem Pyrometer ausgelesen. Die auf diese Weise ermittelte Heizkurve weist eine Steigung dC°/dt auf, die für den nachfolgenden Betrieb des Heizfeldes 10, 20 relevant ist. In diesem Zusammenhang wird durch Überlagerung der Einzelintensität der einzelnen Heizstrahler 15, 25 anhand des Superpositionsprinzips ein Gesamttemperaturfeld ermittelt (siehe Fig. 4) . Dabei werden auch die Einflüsse des Spannrahmens 30 durch entsprechende Parametrierung berücksichtigt und kompensiert.

In den Randbereichen der Folie geht, wie zuvor beschrieben, ein Teil der Wärmeenergie in den bspw. aus Aluminium oder Stahl gefertigten Spannrahmen oder Klemmvorrichtung 30 über. Dies würde ohne Kompensation zu einer inhomogenen Wärmeverteilung auf der Folie F führen.

Im Betrieb wird eine Folie F durch den Spannrahmen 30 gehalten und zwischen die Heizfelder 10, 20 eingebracht. Entsprechend der in der Steuerung hinterlegten Einschaltprozedur werden die einzelnen Heizstrahler 15, 25 individuell eingeschaltet, um die Folie zu Erwärmen. Dabei werden Heizstrahler jeweils bei voller Leistung betrieben. Nachdem die Folie F entsprechend der Berechnung des Gesamttemperaturfeldes die Verarbeitungstemperatur erreicht hat, werden die Heizstrahler zu einem definierten Zeitpunkt gleichzeitig ausgeschaltet. Die Folie kann nun in einem Kaschierprozess weiterverarbeitet werden.

## Patentansprüche

1. Thermoformvorrichtung, umfassend:
Eine Einrichtung (30), insbesondere einen Spannrahmen oder eine Klemmvorrichtung (30), zum Aufnehmen und Halten einer Folie (F),
zumindest ein Heizfeld (10, 20) mit einer Vielzahl von Heizstrahlern (15, 25), und
eine Steuervorrichtung zum Betrieb der Heizstrahler (15, 25), wobei die Steuervorrichtung eingerichtet ist, durch Überlagerung der Einzelintensität der Heizstrahler (15, 25) ein Gesamttemperaturfeld zu ermitteln und den jeweiligen Einschaltzeitpunkt der Heizstrahler (15, 25) für eine Heizkurve festzulegen,
Z wobei in der Steuereinrichtung eine vorab für den Betrieb eines Heizstrahlers (15, 25) ermittelte Referenzkurve für die Erwärmung einer bestimmten Folienart hinterlegt ist, Z **dadurch gekennzeichnet, dass** die Referenzkurve für eine Überlagerungsberechnung aus der Vielzahl der Heizstrahler für Einschaltzeitpunkte der Heizstrahler verwendet wird.

2. Thermoformvorrichtung gemäß Anspruch 1, **dadurch gekennzeichnet, dass** die Heizstrahler Infrarot-Heizstrahler, insbesondere Infrarot-Halogen-Heizstrahler und/oder mittelwellige IR-Strahler, sind.

3. Thermoformvorrichtung gemäß einem der vorangegangenen Ansprüche, **dadurch gekennzeichnet, dass** die Steuereinrichtung eingerichtet ist, einen gemeinsamen Ausschaltzeitpunkt der Heizstrahler (15, 25) festzulegen.

4. Thermoformvorrichtung gemäß einem der vorangegangenen Ansprüche, **dadurch gekennzeichnet, dass** diese ferner eine Heizfeldeinstelleinrichtung aufweist, um die Temperaturverteilung des zumindest einen Heizfeldes (10, 20) einzustellen.

5. Thermoformvorrichtung gemäß Anspruch 4, **dadurch gekennzeichnet, dass** die Heizfeldeinstelleinrichtung eine Anzeige aufweist, um berechnete Temperaturfelder und/oder das Gesamttemperaturfeld des zumindest einen Heizfeldes (10, 20) anzuzeigen.

6. Thermoformvorrichtung gemäß einem der vorangegangenen Ansprüche, **dadurch gekennzeichnet, dass** die Heizstrahler (15, 25) mit voller Leistung betrieben werden.

7. Thermoformvorrichtung gemäß einem der vorangegangenen Ansprüche, **dadurch gekennzeichnet, dass** die Thermoformvorrichtung ein oberes Heizfeld (10) und ein unteres Heizfeld (20) aufweist, zwischen denen die Einrichtung (30) angeordnet werden kann.

8. Verfahren zum Erwärmen einer Folie, bevorzugt unter Einsatz einer Thermoformvorrichtung gemäß einem der vorangegangenen Ansprüche, umfassend die Schritte:
Halten einer Folie (F), insbesondere mittels eines Spannrahmens (S) oder einer Klemmvorrichtung,
Einschalten mehrerer Heizstrahler (15, 25) zumindest eines Heizfeldes (10, 25), welches gegenüberliegend der, bevorzugt durch den Spannrahmen (30) gehaltenen, Folie (F) angeordnet ist,
wobei der Einschaltzeitpunkt der jeweiligen Heizstrahler (15, 25) basierend auf einem Gesamttemperaturfeld der Heizstrahler für eine Heizkurve festgelegt wird,
wobei in einer Steuereinrichtung eine vorab für den Betrieb eines Heizstrahlers (15, 25) ermittelte Referenzkurve für die Erwärmung einer bestimmten Folienart hinterlegt ist, **dadurch gekennzeichnet, dass** die Referenzkurve für eine Überlagerungsberechnung aus der Vielzahl der Heizstrahler für Einschaltzeitpunkte der Heizstrahler verwendet wird.

9. Verfahren gemäß Anspruch 8, bei dem die Heizstrahler (15, 25) mit voller Leistung betrieben werden.

10. Verfahren gemäß Anspruch 8 oder 9, bei dem die Heizstrahler (15, 25) zu einem gemeinsamen Zeitpunkt ausgeschaltet werden.

11. Verfahren gemäß einem der Ansprüche 8-10, bei dem die Heizstrahler zeitversetzt eingeschaltet werden.

12. Verfahren gemäß einem der Ansprüche 8-11, bei dem vorab für den Betrieb eines Heizstrahlers (15, 25) eine Referenzkurve für die Erwärmung einer bestimmten Folienart ermittelt wird, welche Referenzkurve für eine Überlagerungsberechnung aus der Vielzahl der Heizstrahler für Einschaltzeitpunkte der Heizstrahler verwendet wird.

## Claims

1. Thermoforming apparatus comprising:
A device (30), in particular a clamping frame or a clamping device (30) for receiving and holding a sheet (F),
at least one heating field (10, 20) with a plurality of radiant heaters (15, 25), and
a control device for operating the radiant heaters (15, 25), wherein the control device is configured to determine a total temperature field through superimposition of the individual intensity of the radiant heaters (15, 25) and to determine the respective switch-on time of the radiant heaters (15, 25) for a heating curve,
wherein a reference curve for the heating of a particular sheet type determined in advance for the operation of a radiant heater (15, 25) is stored in the control device, **characterised in that** the reference curve is used for a superimposition calculation from the plurality of radiant heaters for switch-on times of the radiant heaters.

2. Thermoforming apparatus according to claim 1, **characterised in that** the radiant heaters are infrared radiant heaters, in particular infrared halogen radiant heaters and/or medium-wave IR radiators.

3. Thermoforming apparatus according to one of the preceding claims, **characterised in that** the control device is configured to define a common switch-off time of the radiant heaters (15, 25).

4. Thermoforming apparatus according to one of the preceding claims, **characterised in that** this further has a heating field adjustment device to adjust the temperature distribution of the at least one heating field (10, 20).

5. Thermoforming apparatus according to claim 4, **characterised in that** the heating field adjustment device has a display for displaying calculated temperature fields and/or the total temperature field of the at least one heating field (10, 20).

6. Thermoforming apparatus according to one of the preceding claims, **characterised in that** the radiant heaters (15, 25) are operated at full power.

7. Thermoforming apparatus according to one of the preceding claims, **characterised in that** the thermoforming apparatus has an upper heating field (10) and a lower heating field (20), between which the device (30) can be arranged.

8. Method for heating a sheet, preferably using a thermoforming apparatus according to one of the preceding claims, comprising the steps:
holding a sheet (F), in particular by means of a clamping frame (S) or a clamping device,
switching on several radiant heaters (15, 25) of at least one heating field (10, 25) which is arranged opposite the sheet (F), preferably held by the clamping frame (30),
wherein the switch-on time of the respective radiant heaters (15, 25) is defined based on a total temperature field of the radiant heaters for a heating curve, wherein a reference curve for the heating of a particular type of sheet determined in advance for the operation of a radiant heater (15, 25) is stored in a control device, **characterised in that** the reference curve is used for a superimposition calculation from the plurality of radiant heaters for switch-on times of the radiant heaters.

9. Method according to claim 8, wherein the radiant heaters (15, 25) are operated at full power.

10. Method according to claim 8 or 9, wherein the radiant heaters (15, 25) are switched off at a common time.

11. Method according to one of the claims 8-10,
wherein the radiant heaters are switched on with a time delay.

12. Method according to one of the claims 8-11,
wherein a reference curve for the heating of a particular sheet type is determined in advance for the operation of a radiant heater (15, 25), said reference curve being used for a superimposition calculation from the plurality of radiant heaters for switch-on times of the radiant heaters.

## Revendications

1. Dispositif de thermoformage comprenant :
un appareil (30), en particulier un cadre de serrage ou un dispositif de serrage (30), pour la réception et le maintien d'un film (F),
au moins un panneau de chauffage (10, 20) avec une pluralité de radiateurs (15, 25), et
un dispositif de commande pour le fonctionnement des radiateurs (15, 25), dans lequel le dispositif de commande est conçu afin de calculer par chevauchement de l'intensité individuelle des radiateurs (15, 25) un champ de température entier et de fixer le moment de mise en service respectif des radiateurs (15, 25) pour une courbe de chauffage,
dans lequel une courbe de référence calculée précédemment pour le fonctionnement d'un radiateur (15, 25) pour le chauffage d'un type de film déterminé est enregistrée dans le dispositif de commande, **caractérisé en ce que** la courbe de référence pour un calcul de chevauchement est utilisée à partir de la pluralité des radiateurs pour des moments de mise en service des radiateurs.

2. Dispositif de thermoformage selon la revendication 1, **caractérisé en ce que** les radiateurs sont des radiateurs à infrarouge, en particulier des radiateurs à halogène à infrarouge et/ou des émetteur à infrarouge à ondes moyennes.

3. Dispositif de thermoformage selon l'une quelconque des revendications précédentes, **caractérisé en ce que** le dispositif de commande est conçu afin de fixer un moment de mise hors service commun des radiateurs (15, 25).

4. Dispositif de thermoformage selon l'une quelconque des revendications précédentes, **caractérisé en ce que** celui-ci présente de plus un dispositif de réglage de panneau de chauffage afin de régler la répartition de température d'au moins un panneau de chauffage (10, 20).

5. Dispositif de thermoformage selon la revendication 4, **caractérisé en ce que** le dispositif de réglage de panneau de chauffage présente un affichage afin d'afficher des champs de température calculés et/ou le champ de température entier d'au moins un panneau de chauffage (10, 20).

6. Dispositif de thermoformage selon l'une quelconque des revendications précédentes, **caractérisé en ce que** les radiateurs (15, 25) sont actionnés à pleine puissance.

7. Dispositif de thermoformage selon l'une quelconque des revendications précédentes, **caractérisé en ce que** le dispositif de thermoformage présente un panneau de chauffage supérieur (10) et un panneau de chauffage inférieur (20), entre lesquels l'appareil (30) peut être agencé.

8. Procédé de chauffage d'un film, de préférence en utilisant un dispositif de thermoformage selon l'une quelconque des revendications précédentes, comprenant les étapes consistant à :
maintenir un film (F), en particulier au moyen d'un cadre de serrage (S) ou d'un dispositif de serrage,
mettre en service plusieurs radiateurs (15, 25) au moins d'un panneau de chauffage (10, 25) qui est agencé à l'opposé du film (F) maintenu de préférence par le cadre de serrage (30),
dans lequel le moment de mise en service des radiateurs (15, 25) respectifs est fixé sur la base d'un champ de température entier des radiateurs pour une courbe de chauffage,
dans lequel une courbe de référence calculée précédemment pour le fonctionnement d'un radiateur (15, 25) est enregistrée dans un dispositif de commande pour le chauffage d'un type de film déterminé, **caractérisé en ce que** la courbe de référence pour un calcul de chevauchement est utilisée à partir de la pluralité des radiateurs pour des moments de mise en service des radiateurs.

9. Procédé selon la revendication 8, pour lequel les radiateurs (15, 25) sont actionnés à pleine puissance.

10. Procédé selon la revendication 8 ou 9, pour lequel les radiateurs (15, 25) sont mis hors service à un moment commun.

11. Procédé selon l'une quelconque des revendications 8 à 10, pour lequel les radiateurs sont mis en service en différé.

12. Procédé selon l'une quelconque des revendications 8 à 11, pour lequel une courbe de référence pour le chauffage d'un type de film déterminé est calculée précédemment pour le fonctionnement d'un radiateur (15, 25), laquelle courbe de référence pour un calcul de chevauchement est utilisée à partir de la pluralité des radiateurs pour des moments de mise en service des radiateurs.
